# NEW EUROPEAN PATENT SPECIFICATION

(11) **EP 0 301 697 B2**
(45) Date of publication and mention of the opposition decision: **11.08.1999**
(45) Mention of the grant of the patent: 08.06.1994
(21) Application number: 88305688.9
(22) Date of filing: 22.06.1988
(51) Int. Cl.: B29C 67/00, B29C 63/34

(54) **A method and apparatus for producing a deformed pipe liner of tubular cross-section.**
Verfahren und Vorrichtung zur Herstellung einer im Querschnitt verformten Rohrauskleidung.
Procédé et appareil de production d'un revêtement tubulaire à section déformée.

(30) Priority: 27.07.1987 US 77883; 30.10.1987 US 114949; 29.04.1988 US 188468
(43) Date of publication of application: 01.02.1989
(73) Proprietor: PIPE LINERS, INC., Metairie Louisiana 70002 (US)
(72) Inventor: Ledoux, Patrick R., New Orleans Louisiana 70125 (US); Fourgaut, Luc R., New Orleans Louisiana 70122 (US)
(74) Representative: Eisenführ, Speiser & Partner

(56) References cited:
- EP-A- 0 000 576
- EP-A- 0 098 547
- WO-A-87/03840
- CH-A- 536 703
- DE-A- 3 519 439
- FR-A- 1 471 221
- FR-A- 2 487 702
- FR-A- 2 503 622
- GB-A- 275 964
- GB-A- 1 580 438
- US-A- 2 423 260

## Description

This invention relates to the use of thermoplastic liners within pipe lines, either initially or as a repair, for protecting the internal walls from deterioration. For deteriorated or damaged piping, the liner restores the fluid transporting capability of the piping and prevents further interior deterioration.

One such liner for protecting the interior of pipe is taught by French Patent No. 250 3622 dated April 13, 1981.

EP-A1-0 098 547 discloses improvements relating to the lining of passageways. In particular, this application pertains to the lining on side of pipelines, wherein prior to the lining itself a lining tube formed from sheet material is formed into a pipe and welded, deflecting the tube so that it is deflected into smaller diametrial size and holding the tube in the deflected condition. The method disclosed is suitable for material such as polypropylene or other material having a plastic memory, and it is stated that polypropylene of a thickness of 1/8 " (3 mm) appears to give satisfactory characteristics.

EP-B1-0 000 576, discloses a method of producing a plastic liner, including the steps of extruding the liner, cooling down the liner, deflecting the liner and finally wrapping the liner by a tape or sleeve of plastic foil or fabric to maintain the liner in the deflected form.

It is a general object of this invention to provide methods and apparatus for the manufacture of a deformed tube product useful as pipe liners of the type disclosed in the french patent 250 3622.

The present method of manufacturing a deformed tube product involves deforming a tubular pipe liner into a reduced cross-section for insertion into a pipe as a liner therefor. The tubular pipe liner may be continuously extruded prior to deforming such a process is taught by DE-A1-3 519 439, but in this document there is no multi-stage forming of the pipe liner. An optional feature of this method is the use of thermoplastic material and its temperature control at the successive stages of formation, during extrusion into its initial and subsequent form, during its deformation, and during its return to ambient usable condition upon installation into the pipe. It is an object of this invention to provide a method and apparatus for the manufacture of pipe liners in continuous deformed lengths which, by suitable methods and apparatus, may be inserted into pipe for subsequently returning the liners in the pipe to their original unstressed extruded cross-section. In practice, the liner configuration has an outside diameter equal to or slightly greater than the inside diameter of the pipe to be protected, whereby the liner is either unstressed or under slight circumferential compression; either of which conditions is readily accommodated by the plastic liner which relies upon the surrounding pipe for its structural support.

It is another object of this invention to deform an initially extruded tubular cross-section without adverse effect on its structural integrity, and in such a manner that an initially extruded tubular cross-section can be restored. To this end, controlled heat may be applied to establish a softened condition of the thermoplastic material after its extrusion, while simultaneously applying deforming tools thereto in order to reduce its cross-sectional configuration. When the desired reduction is achieved, heat may be withdrawn and the finished product of continuous length is then stored on spools for storage, transport and subsequent installation.

These objects are attained by a method according to claim 1. Then objects are further attained by an apparatus according to claim 2.

While a U-shaped reduced tubular configuration is particularly shown and described, it is to be understood that a V-shape or other cross-sectional configurations may be used, whether they be H-shaped or X-shaped, or the like. The U-shape, or V-shape, is presently considered to be the most practical and preferred configuration for such a tube product.

In carrying out this invention, the deformation of said tubular pipe lines - which is an initially extruded tube of e.g. cylinder form-progresses in a gradual manner, by shaping means. That is, at least one side of the pipe liner is increasingly depressed so as to condition the tubular extrusion for its lateral collapse into a reduced U-shaped, or V-shaped, cross-sectional form; thus providing a deformed tube. As pointed out above, this deformation may be conducted in the presence of controlled heat substantially below fluidity of the thermoplastic material and such that the plastic is deformed without adversely effecting its structural integrity, whether in its deformed condition or in its subsequently re-established initial condition. Rollers are used to deform an initially extruded tube. In practice, the deformation is gradual, step by step, utilizing combined pairs of opposed shaping rollers. A feature hereof is the lateral collapse of the tubular extrusion over a forming rail, by means of opposed shaping rollers that embrace the forming rail. The finished product is then cooled to ambient temperature during and/or upon its delivery from the forming rail, as by means of a cooling trough. Heating and cooling is by means of heat adsorption or radiant heating, and preferably by temperature controlled water baths or spray.

The present day commercial demand for this pipe liner is a product ranging from 2 inches to 24 inches in diameter. The wall thickness will vary in proportion to diameter as circumstances require. Accordingly, there will be variations in the process steps involving the plurality of shaping means disclosed herein as shaping rollers and back-up roller, whereby at least one side of the tubular extrusion is deformed as required. That is, the number of shaping means and the step by step degree of deformation is variable, depending upon the size and wall thickness and material to be deformed. A feature of this method and apparatus is that the product may be pulled out of the extruder and from the deforming tool, for delivery to a storage spool, in a controlled manner, whereby the cross-sectional configuration of the deformed tube product is uniform and within specified dimensional tolerance. With respect to variations in size and tolerances, and especially with respect to larger diameter pipe liners, it is an object of this invention to provide pulling traction on the tube during its process of deformation, and applied to the shaping means, disclosed herein as powered rollers. In practice torque is independently applied to the shaping and back-up rollers, so as to ensure uniform advance of the deforming tube product.

The product herein disclosed is a thermoplastic pipe liner that is reduced from its initially extruded cross-section, so that it can be easily pulled inside a pipe line and then restored to its initially extruded cross-section. Assuming pipe to be round in cross-section, the outside diameter of an initially extruded and/or reformed liner tube is the same or slightly greater than the inside diameter of the pipe that receives it, so that the liner exterior comes into perfect interface contact with the pipe interior and preferably under slight circumferential compression. This interface contact of liner within and with the pipe eliminates any annulus therebetween, and so that the requirement of filling such an annulus is virtually eliminated. A feature of this liner is its thin-wall configuration made of a thermoplastic such as polyethylene, nylon, Teflon™, ABS, or any other such plastic material, whereby the small loss of inside diameter of the flow passage is largely compensated for by the exceptional flow coefficient within the liner made of such a thermoplastic material. For new pipe line projects, expensive pipe materials such as stainless alloys can be substituted with ordinary steel pipe, and lined with this product liner, thereby realizing a cost saving of 1.5 to 2.2, together with the improved fluid tolerance properties of the plastic which can be selected to best advantage. Accordingly, pipe lines which are structurally sound need not be replaced, since this product liner can be installed and replaced as circumstances require.

The method and apparatus herein disclosed for the manufacture of this product liner involves a primary step of extruding thermoplastic tubing, and the secondary step of deforming the thermoplastic tubing. The primary step of extrusion involves generally, an extruder that receives raw plastic material and delivers a tubular cross-section through a vacuum trough that controls the processing temperature and precise configuration of the tubular cross-section. The secondary step of deforming the precise tubular cross-section involves a multi-stage shaping tool that deforms the extrusion at controlled temperature and delivers it through a cooling trough as the finished product liner. The finished product liner is drawn from the secondary step by a puller that controls the linear speed of the production and maintains a constant wall thickness of the finished product liner.

By this invention, pipes of between 2 and 24 inches in diameter, and as long as two miles or more may be fitted with a continuous liner to provide ideal corrosion protection in both new and existing corroded pipes.

Other advantages of this invention include:
1. Structural characteristics of the pipe to be relined are preserved while the thickness of the U-Liner wall can be from 3.5 to 18 mm, depending on design requirements. The minimal reduced inside diameter will be compensated by the exceptional flow coefficient of the thermoplastic liner.
2. In the case of new pipe projects, the U-shaped liner can be used to avoid the need for expensive materials such as stainless steel or alloys for transport of highly corrosive products. In most cases, the flow inside the plastic liner will be more efficient than if stainless steel or alloy pipes are used.
3. Lining of internally corrodible pipes will provide operators with longer life in both new and repaired pipelines, without costly total replacement of pipe sections due to corrosion damage. This will effectively reduce repair and maintenance downtime and therefore greatly reduce production loss.
4. Since the U-shaped liner can be inserted in very long sections, this method simplifies the often difficult and much protested surface disturbance of right-of-way in environmentally sensitive areas or across urban concentrations of people and traffic.
5. Although the normal use life expectancy of the thermoplastic lining is up to one hundred years, unexpected damage can be repaired economically due to the easy removal and replacement of the U-Liner and its relatively minimal cost. The thermoplastic insert U-Liner will restore corroded pipes to original flow quality and eliminate further abrasion and corrosion damage to the steel pipe walls, thus substantially lengthening the economic life of the installation.
6. The process is simple, fast and cost effective, with minimum downtime.

In a preferred embodiment, the pipe liner is constructed of high density polyethylene (HDPE), which may be a Union Carbide DGDB-2480 Black 4865 compound meeting the requirements of ASTM 1248-81a for Type PE 34 Class C product. It is characterized by a high level of environmental stress cracking resistance and high strength. Nylon, Teflon™, ABS or any other such plastic material may also be utilized.

The preferred HDPE liner material has been tested with over 280 chemicals that might be expected to flow through a pipeline and the following observations have been reported relating to the above identified HDPE which are particularly relevant to this invention:
(a) high resistance to H₂S, CO₂ and NaCl;
(b) excellent for transporting gases;
(c) cross-linkable to handle products at high temperatures (250°F);
(d) stability in aging;
(e) low roughness coefficient of 0.020;
(f) does not retain deposits or sediments.

The invention as described herein has applications to many types of pipeline, including water and mud injection; oil and gas; vapors and fumes; saltwater; utility sewage and drainage; gas gathering and distribution, etc.

Other objects and advantages will become apparent from the detailed description of the invention which follows.
FIGURE 1 is a block diagram illustrating the method of producing an extruded plastic pipe liner for restoration to its initially extruded cross-sectional configuration;
FIGURES 2a, 2b, 2c, 2d and 2e are sectional views of the extruded pipe liner in its sequential stages of deformation, and showing in phantom line the cylindrical configuration of the finished liner for comparison of the deformation in each figure;
FIGURE 3 is an enlarged longitudinal sectional view of the deformer apparatus which performs the method herein disclosed to deform extruded thermoplastic tubing;
FIGURES 4 through 9 are enlarged detailed sectional views taken substantially as indicated by lines 4-4, 5-5, 6-6, 7-7, 8-8 and 9-9 in FIGURE 3;

Referring now to the drawings, this invention is concerned with lining new and old pipe lines with a deformed tube that is pulled into the pipe line and then reformed to tightly fit therein. The tube can be made of any suitable material which will collapse and subsequently return to its original cross-section, i.e., a plastic. In practice, the pipe liner is a thin-walled plastic sleeve extruded in continuous lengths and later inserted into pipe lines for internal protection; for example to protect new pipe lines and to reconstitute deteriorated pipe lines as well.

Accordingly, the pipe liner L as it is disclosed herein is initially extruded so as to have an exterior diameter at least as large as the interior diameter of the pipe into which it is to be inserted, and preferably slightly in excess of said pipe diameter in order that the tubular pipe liner L is under slight circumferential compression when it is in operating position in the pipe line. A feature of this invention is the deformation of the tubular pipe liner L, to decrease its cross-section configuration for storage and to facilitate its insertion into a pipe. That is, the original cylinder cross-section of the pipe liner L is collapsed and later restored, all without destroying its dimensional properties. Therefore, the circular configuration of the pipe liner L is not stretched, even though the material is plastic and subject to flow. In other words, the original cylindrical cross-section properties of the initially extruded pipe liner L are preserved in its deformed condition which enables its insertion into pipe lines and for its subsequent reformation into its original cylindrical cross-section. The characteristic feature of this invention is that the initially extruded thermoplastic pipe liner L is shaped and thereby deformed without elongation, whereby its dimensional properties necessary for restoration are retained.

Referring now to the deformation of pipe liner L as shown in Figures 2a through 2e of the drawings, the initially extruded configuration is cylindrical, having inner and outer diameter walls 10 and 11. As shown, there is an upper back-up section 12 and a lower deformable section 13. The deformation is bilaterally symmetrical and disposed about a vertical plane a of symmetry and about which the tube formation is collapsed by means of bending and folding. Accordingly, there are opposite side sections 14 and 15 which are established by a center fold 16 that inverts the lower deformable section 13 upwardly into juxtaposed relation to the inside diameter 10 of the back-up section 12. Therefore, each side section is comprised of a side wall depending from top dead center of the tube form and bent inwardly so as to continue upwardly to the center fold 16. It is significant that the two side sections 14 and 15 are thereby collapsed into double wall configurations which are further collapsed inwardly toward the center plane a of symmetry as clearly shown in Figure 2e which is the desired product formation.

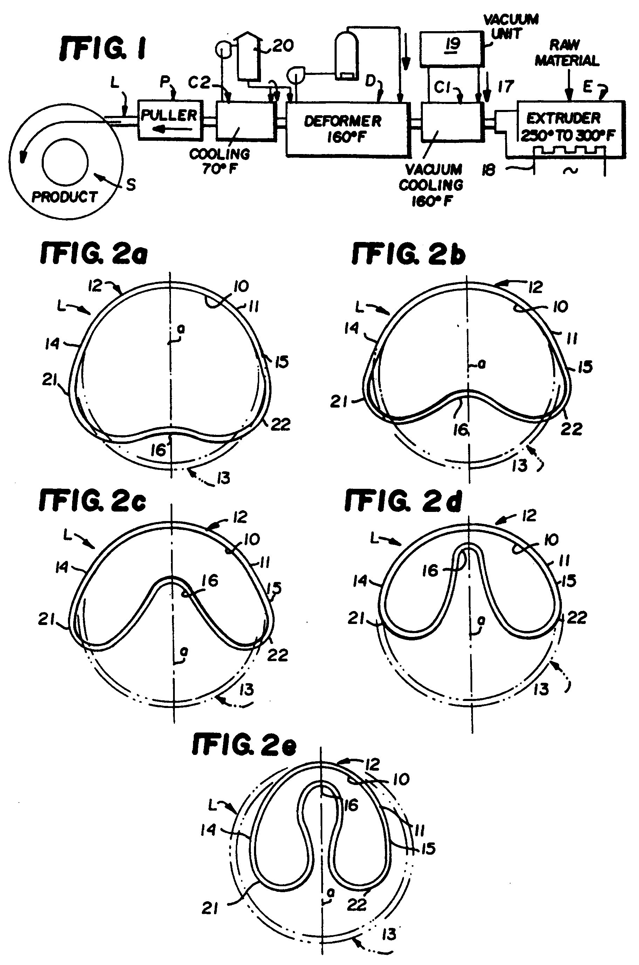

Referring now to Figure 1 of the drawings, the entire method of tube formation and deformation is illustrated in its general form. As shown, there is an extruder means E followed by a cooling means C1 that delivers the tube form into a deformer apparatus D which performs the product deformation process. Following the deformation process, the product is then delivered through cooling means C2 so as to establish it at ambient temperature for delivery through a puller means P and onto a storage spool S or the like. The extruder means E is state of the art and receives the raw thermoplastic material and forces it through an extrusion die 17 at, for example, 350° to 440°F using heating means 18 to attain that temperature. The cooling means C1 is state of the art, and preferably a vacuum cooling means supported by a vacuum cooling unit 19 and reducing the tube form temperature to, for example, 260°F. The deformer apparatus D is subjected to heat control means H that maintains this necessary deformation temperature of, for example, 260°F. The cooling means C2 is state of the art and reduces the tube form temperature to ambient, and it is supported, for example, by a cooling tower 20 or the like. During the cooling period, the shape of the deformed liner is to be maintained until the pipe reaches an ambient temperature. This shape can be maintained by outside pressure such as rollers, caterpillars, or straps, or maintained by an internal vacuum. The means C1 and C2 include pump means for water recirculation, and it is to be understood that the aforementioned temperatures can vary as circumstances require. Puller means P is also state of the art and draws the finished deformed tube product from the preceding apparatus, its pulling force being controlled so as not to stretch or compress the tube form in the process of its deformation, and thereby controlling its wall thickness.

Referring now to the method or process of deforming a continuously extruded tube form of plastic material, the steps thereof are sequentially as follows: firstly, a cylindrical tube form is extruded as shown by phantom lines in Figures 2a through 2e, thereby establishing a uniform wall section, and preferably of cylindrical configuration. The top semi-circular portion, namely the back-up section 12, is supported and the fold 16 is impressed at bottom dead center of the tube form in alignment with the center plane of symmetry and progressing upwardly and into juxtaposed relation to the inside wall 10 of the tube form at top dead center thereof. It is to be understood that the deformation process can be performed on any angle, such as prescribed above on a dead center bottom, but also from its side, top or any other angle. In this process of deformation, the opposite side sections 14 and 15 are turned and/or bent inwardly at their lower extremities 21 and 22, so that the walls thereof continue upwardly within their respective inside walls 10 and to the fold 16 (see Figures 2a through 2d).

The fold 16 is formed by bending the tube form inwardly at bottom dead center thereof for collapse along the center plane of symmetry. Simultaneously with this collapse, the lower extremities 21 and 22 of the side sections 14 and 15 are also inwardly bent as above described. In practice, collapse of the tube form is performed in a multiplicity of steps, in order to conform gradually to the changing configuration of the tube form and without elongation of its cross-sectional configuration. As shown, however, there are four steps of collapse along the center line a of symmetry, and each of which has back-up against the top section 12, it being the bottom section 13 that is deformed.

The first step of collapse shown in Figure 2a initiates the fold 16 by bending and commences to bend the lower extremities 21 and 22. The succeeding, three steps of Figures 2b and 2c and 2d progressively and increasingly bend and move the fold 16 close to the inside wall 10 at the top dead center of the tube form and simultaneously increasingly and progressively bend and move the lower extremities 21 and 22 upwardly as shown. Thus, the tubular cross-section is reduced in its sectional configuration.

Referring now to Figure 2e of the drawings, a final step of collapse is performed by bending the opposite side sections 14 and 15 inwardly toward the center plane of symmetry, in order to reduce the arcuate configuration of said two side sections and so that they occur within the radius or outside diameter of the initial tube form, and so as to clear within the inside diameter of the pipe line into which the ultimate pipe liner L is inserted. A feature of this final collapsing step is bringing together the two lower extremities 21 and 22 into juxtaposed relation to the center plane of symmetry, and preferably closer together than the continuing tube walls upstanding therefrom to the bends of fold 16.

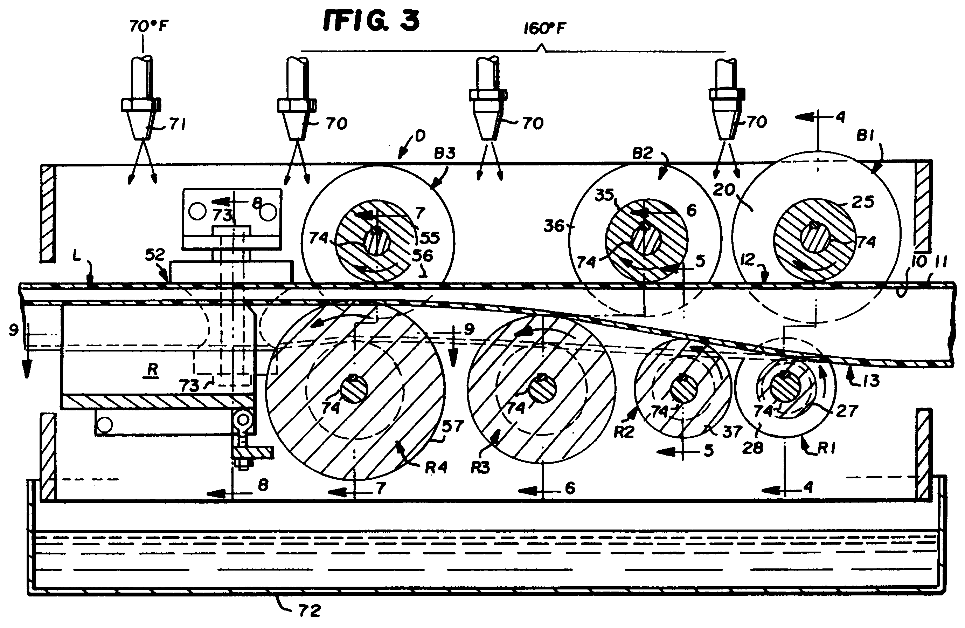

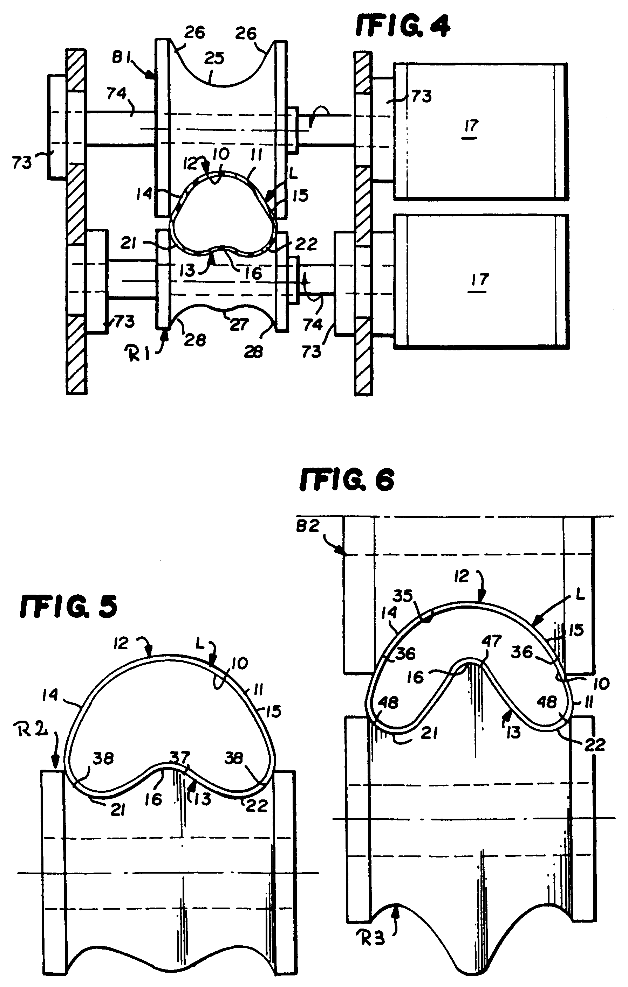

Referring now to the preferred form of apparatus for deforming a continuously extruded tube form of plastic material, see Figure 3 and the following sectional views Figures 4 through 9. It will be observed that there are five collapsing steps performed thereby, four incrementally progressive steps of folding the bottom section 13 of the tube form upwardly along the center plane of symmetry, and a fifth step of laterally inward collapse. Each and all of these five steps involves bending, and is essentially if not completely devoid of stretching or elongation of the tube wall of the pipe liner L, in its transverse cross-section. Each step of collapse is performed by forming means, preferably in the form of shaping rollers R1, R2, R3 and R4, followed by shaping rollers S1 and S2. It is these rollers which increasingly and progressively collapse the extruded tube form. In practice, the shaping rollers R1-R4 are lowermost, there being back-up rollers B1, B2 and B3 to support the tube form as it is impressed upon by the said rollers R1-R4. As shown, the rollers R1-R4 and B1-B3 are on spaced and parallel horizontally disposed and transverse axes.

Back-up roller B1 is disposed over the shaping roller R1 (see Figure 4) and is characterized by its concaved spool-shape 25 at the center plane of symmetry and conforming to the substantially semi-circular back-up section 12 of the tube form. Back-up roller B1 has opposite flaring side flanges that embrace the initial formation of the side sections 14 and 15 of the tube form.

Shaping roller R1 (see Figure 4) is characterized by its convex fold initiating and shaping perimeter 27 at the center plane of symmetry to depress the tube form wall upwardly at bottom dead center. Shaping roller R1 has opposite concave side flanges 28 that embrace the initial formation of the lower extremities 21 and 22 of the side sections 14 and 15. The perimeters of roller flanges 26 and 28 are closely related so as to capture the tube form therebetween.

Back-up roller B2 is disposed over and intermediate shaping rollers R2 and R3 (see Figure 3) and is characterized by its concaved spool shape 35 at the center plane of symmetry and conforming to the substantially semi-circular back-up section 12 of the tube form. Back-up roller B2 has opposite flaring flanges 36, to a lesser extent than that of roller B1, to embrace the formation of the side sections 14 and 15 of the tube form.

Shaping roller R2 (see Figure 5) is characterized by its convex fold shaping perimeter 37 at the center plane of symmetry to further shape the tube form wall upwardly along said plane of symmetry. Shaping roller R2 has opposite concaved side flanges 38 that embrace the lower extremities 21 and 22 of the side sections 14 and 15. The perimeters of roller flanges 36 and 38 are somewhat spaced and guide the tube form therebetween.

Shaping roller R3 (see Figure 6) is characterized by its convex fold shaping perimeter 47 at the center plane of symmetry to further shape the tube form wall upwardly along said plane of symmetry. Shaping roller R3 has opposite concaved side flanges 48, of lesser extent than roller R2, that embrace the lower extremities 21 and 22 of the side sections 14 and 15. The perimeters of roller flanges 36 and 48 are somewhat spaced and guide the tube form therebetween.

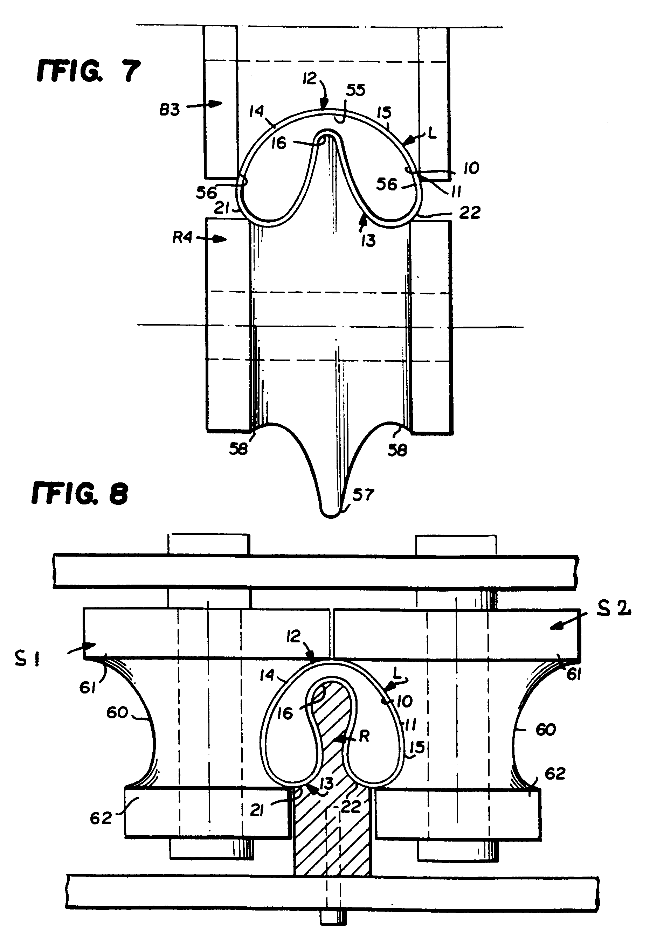

Back-up roller B3 (see Figure 7) is disposed over shaping roller R4 and is characterized by its concaved spool-shape 55 at the center plane of symmetry and conforming to the substantially semi-circular back-up section 12 of the tube form. Back-up roller B3 has minimized side flanges 56 that embrace the side sections 14 and 15 of the tube form.

Shaping roller R4 (see Figure 7) is characterized by its most sharply convexed fold shaping perimeter 57 at the center plane of symmetry to still further shape the tube form wall along said plane of symmetry. Shaping roller R4 has opposite concaved side flanges 58, of still lesser extent than roller R3, that embrace the lower extremities 21 and 22 of the side sections 14 and 15. The perimeters of roller flanges 56 and 58 are closely related so as to capture and guide the tube form therebetween.

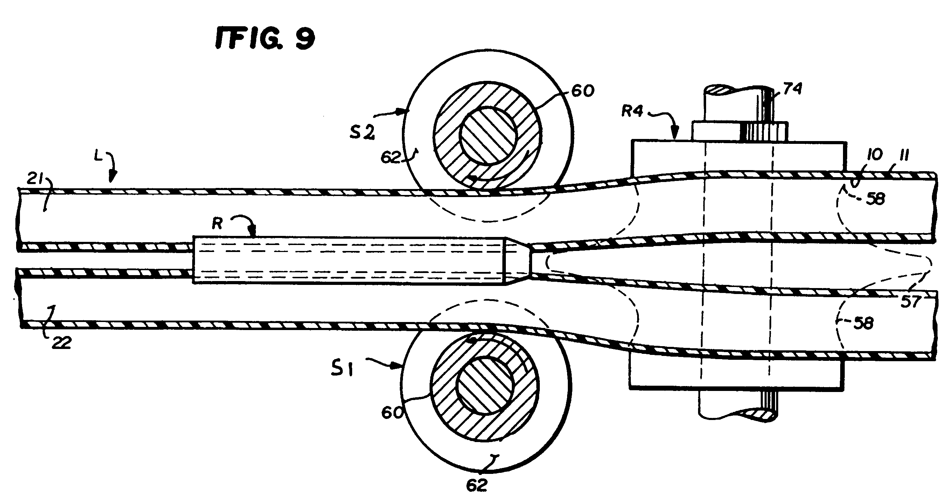

The fifth and final collapsing step is performed by a pair of laterally positioned shaping rollers S1 and S2 disposed at opposite sides of the tube form as it emanates from shaping roller R4 (see Figures 8 and 9). Rollers S1 and S2 are to reduce the arcuate cross-section of back-up section 12 of the tube form, as shown. Accordingly, the rollers S1 and S2 are disposed on spaced and parallel vertical axes and are characterized by a concave spool shape 60 of curvilinear configuration increasing in curvature from top dead center, each roller, from the initial full radius of the tube form to the smaller radius of the lower extremities 21 and 22. The rollers S1 and S2 have top and bottom flanges 61 and 62 which are peripherally juxtaposed so as to completely capture the finally collapsed and deformed tube form, thereby establishing the product pipe liner L.

In accordance with this invention, and as best illustrated in Figures 8 and 9 of the drawings, the tube form of pipe liner L is finally collapsed onto a rail R disposed between the shaping rollers S1 and S2. The rail R is of a cross-sectional configuration to conform with the inside walls of the side sections 14 and 15 and of the lower extremities 21 and 22. Accordingly, and as clearly shown, the final cross-sectional configuration of the pipe liner L is established. In practice, the rail R has sliding engagement with the tube form and is of substantial longitudinal extent so as to enable a reduction in temperature and firming up while being held in the required cross-sectional configuration. Note particularly the hourglass cross-section of the rail R that accommodates the aforementioned collapsing of the lower extremities 21 and 22, bringing them closer together in relation to the center plane of symmetry than the upstanding inner walls extending to the bends of fold 16. In practice, rail R is optional depending on the shape to be defined. If a precise curvature 16 is necessary, the rail R will aid in keeping such a shape. This rail R, for example, would be necessary for the bud fusion of the deformed pipe.

From the foregoing, it will be observed that the shaping of the tube form is gradual and progressive (see Figures 3 and 9) and from Figure 1 it will be observed that the temperature control is involved, and the material involved is a thermoplastic. Accordingly, and as best illustrated in Figure 3 of the drawings, there are water nozzles 70 that dispense tempered water so as to maintain the temperature of, for example, 210°F in order to soften the plastic material and to ensure its bending properties. Other heat sources such as hot air or radiant heat can be incorporated to obtain the desired temperature of the pipe, which is to be above the raw materials' crystallization point. Nozzles 70 disseminate hot water into the area of the shaping rollers R1 through R4 and S1 and S2. Thus, the tube form is made plastic so as to be shaped and bent into, the desired deformed condition. Following the final shaping of the tube form and its sliding engagement on the rail R, the shape enabling temperature of the plastic tube form is reduced to ambient by water nozzles 71 that dispense tempered water at lower temperature so as to cool the finished pipe liner L to, for example, 70°F, all as shown in Figures 1 and 3 of the drawings. As shown in Figure 3, the tempered water is collected in a sump or pan 72 for its recirculation as shown in Figure 1. The cooling means C2 reduces the tube form to ambient temperature on or passing into delivery from the rail R.

As shown in Figure 3 of the drawings, the rollers B1-B3, R1-R4 and S1 and S2 are free to turn on bearings 73 and thereby enable forward motion of the tube form through the apparatus as described. However, as thin-walled large diameter pipe liners L are processed, it becomes necessary with some materials to assist movement of the tube form therethrough. Accordingly, torque means M in the form of motors M, electrical or hydraulic, provide the assist required (see Figure 4). It is to be understood that anti-friction bearings 73 are provided with shafting 74, all as is shown throughout the drawings.

From the foregoing, it will be understood that a tubular pipe line L is provided that is reduced in cross-sectional configuration so as to be readily inserted into pipe lines and then reformed to its initially extruded cross-sectional configuration, whereby it properly fits into the pipe line for which it is designed, all as differing circumstances require.

## Claims

1. A method for deforming a pipe liner having a tubular cross-section and being made of a thermoplastic material, wherein a deformable section of said cross-section is diametrically depressed inwardly and opposite side sections (14, 15) thereof are collapsed to form double-wall configurations, comprising the steps of
a) delivering the pipe liner from extruding means (E) at a raised temperature, reducing the temperature of the extruded pipe liner by cooling means, said cooling means delivering the pipe liner into deforming means,
b) supporting an upper back-up section (12) of said cross-section;
c) depressing said cross-section at a lower section (13) and along a center plane of symmetry a to form a fold (16);
d) increasingly depressing in multiple stages said lower section (13) and progressing said fold (16) inwardly into a juxtaposed relation to the inside wall (10) of the tubular cross-section; wherein lower extremities (21, 22) of said opposite side sections (14, 15) are bent inwardly; and
e) reducing the cross-sectional configuration by bending the opposite side sections (14, 15) of double wall configuration inwardly to bring the lower extremities (21, 22) into a juxtaposed relation to the center plane of symmetry a;
f) collapsing of the pipe liner to said double-wall configuration being carried out in the deforming means at a reduced and controlled temperature, using heat control means during the deforming step to maintain the necessary deformation temperature, and the collapsed tubular cross section is then brought to ambient temperature.

2. An apparatus for deforming a pipe liner having a tubular cross-section and being made of a thermo plastic material, said pipe liner being delivered from extrusion means at elevated temperature and being cooled to a reduced temperature by cooling means arranged between the extrusion means and the deforming apparatus said deforming apparatus comprising
a) a plurality of revolvable first shaping rollers (R1-R4); and
b) one pair of revolvable second shaping rollers (S1, S2) laterally disposed on vertical axes at opposite sides of a center plane of symmetry a and having a concave curvilienar spool-shape (60) to engage and depress opposite side sections (14, 15) of said pipe liner cross-section toward said center plane of symmetry a; whereby said pair of revolvable second shaping rollers (S1, S2) is arranged downstream of the first shaping rollers (R1-R4);
c) revolvable back-up rollers (B1-B3) disposed on a horizontal axis parallel to the axis of said first shaping rollers (R1-R4) and in opposition to said first shaping rollers;
d) heat control means to maintain the necessary deformation temperature;
wherein
e) the back-up rollers (B1-B3) have a concaved spool-shape (25) at the center plane of symmetry a conforming to a substantially semi-circular back-up section (12) of said pipe liner cross-section; and
f) the first shaping rollers (R1-R4) have a convex fold initiating and shaping perimeter (27, 37, 47, 57) at the center plane of symmetry a to depress a deformable section (13) of said pipe liner cross-section diametrically toward the back-up section (12) thereof along the center plane of symmetry a, thereby creating double-wall configurations.

3. The apparatus of claim 2, characterized in that the second shaping rollers (S1, S2) have juxtaposed side flanges (61, 62) capturing the deformed pipe liner cross-section, the apparatus further comprising a rail (R) conforming to the shape of inner walls of said double-wall configurations, the rail (R) having sliding engagement therewith.

4. The apparatus of claim 2 or 3, characterized by an arrangement of three back-up rollers (B1-B3) and four first shaping rollers (R1-R4) on spaced and parallel horizontally disposed axes, with the first shaping rollers (R1-R4) being disposed lowermost and the back-up rollers (B1-B3) being disposed over the first shaping rollers (R1-R4), wherein the four first shaping rollers (R1-R4) have shaping perimeters (27, 37, 47, 57) disposed for four incrementally progressive deforming steps.

## Patentansprüche

1. Verfahren zum Verformen einer Rohrauskleidung, die einen rohrförmigen Querschnitt aufweist und aus einem thermoplastischen Material hergestellt ist, wobei zur Bildung von doppelwandigen Anordnungen ein verformbarer Bereich des Querschnitts diametral nach innen eingedrückt wird und einander gegenüberliegende Seitenbereiche (14, 15) davon zusammengedrückt werden,
gekennzeichnet durch die Schritte, daß man
a) die Rohrauskleidung von einer Extrudiereinrichtung (E) bei erhöhter Temperatur abgibt, die Temperatur der extrudierten Rohrauskleidung mittels Kühleinrichtungen reduziert, wobei die Kühleinrichtungen die Rohrauskleidung in eine Verformungsvorrichtung abgeben;
b) einen oberen Abstützbereich (12) des Querschnitts abstützt;
c) den Querschnitt an einem unteren Bereich (13) und entlang einer Mittelpunkts-Symmetrieebene a zur Bildung einer Falte (16) eindrückt;
d) den unteren Bereich (13) in mehreren Schritten zunehmend eindrückt und die Falte (16) weiter nach innen in eine Juxtaposition zur Innenwand (10) des rohrförmigen Querschnitts fortsetzt;
wobei untere Extremitäten (21, 22) der gegenüberliegenden Seitenbereiche (14, 15) nach innen gebogen werden;
e) die Querschnitts-Konfiguration vermindert, indem man die gegenüberliegenden Seitenbereiche (14, 15) der doppelwandigen Anordnung nach innen biegt, um die unteren Extremitäten (21, 22) in eine Juxtaposition zur Mittelpunkts-Symmetrieebene a zu bringen;
f) das Zusammendrücken der Rohrauskleidung zu der doppelwandigen Anordnung in der Verformungsvorrichtung bei verminderter und gesteuerter Temperatur durchführt, wobei während des Verformungsvorganges Wärmesteuerungsmittel eingesetzt werden, um die erforderliche Verformungstemperatur aufrecht zu erhalten und dann den zusammengedrückten rohrförmigen Querschnitt auf Umgebungstemperatur bringt.

2. Vorrichtung zum Verformen einer Rohrauskleidung, die einen rohrförmigen Querschnitt aufweist und aus einem thermoplastischen Material hergestellt ist, wobei die Rohrauskleidung von einer Extrudiereinrichtung bei erhöhter Temperatur abgegeben wird und mittels Kühleinrichtungen, die zwischen den Extrudiereinrichtungen und der Verformungsvorrichtung angeordnet sind, auf eine reduzierte Temperatur gekühlt wird, wobei die Vorrichtung aufweist
a) mehrere drehbare erste Formwalzen (R₁-R₄); und
b) ein Paar drehbare zweite Formwalzen (S1, S2), die an einander gegenüberliegenden Seiten einer Mittelpunkts-Symmetrieebene a seitlich an vertikalen Achsen angebracht sind und eine konkave krummlinige spulenartige Gestalt (60) aufweisen, um gegenüberliegende Bereiche (14, 15) des Querschnitts der Rohrauskleidung zu ergreifen und in Richtung auf die Mittelpunkts-Symmetrieebene a einzudrücken, wobei das Paar drehbare zweite Formwalzen (S1, S2) stromabwärts von den ersten Formwalzen (R1-R4) angeordnet ist;
c) drehbare Abstützwalzen (B1-B3), die auf einer zur Achse der ersten Formwalzen (R1-R4) parallelen horizontalen Achse und gegenüberliegend zu den ersten Formwalzen angeordnet ist;
d) Wärmesteuerungsmittel zur Aufrechterhaltung der erforderlichen Verformungstemperatur;
wobei
e) die Abstützwalzen (B1-B3) an der Mittelpunkts-Symmetrieebene a eine konkave spulenartige Gestalt (25) aufweisen, die einem im wesentlichen halbkreisförmigen Abstützbereich (12) des Querschnitts der Rohrauskleidung entspricht; und
f) die ersten Formwalzen (R1-R4) bei der Mittelpunkts-Symmetrieebene a eine konvexe äußere Begrenzung (27, 37, 47, 57) zum Erzeugen einer Falte und zum Formen aufweisen, um einen verformbaren Bereich (13) des Querschnitts der Rohrauskleidung diametral in Richtung auf dessen Abstützbereich (12) entlang der Mittelpunkts-Symmetrieebene a einzudrücken, wodurch sich doppelwandige Anordnungen bilden.

3. Vorrichtung nach Anspruch 2,
dadurch gekennzeichnet, daß die zweiten Formwalzen (S1, S2) Seitenflanken (61, 62) in Juxtaposition aufweisen, die den verformten Querschnitt der Rohrauskleidung ergreifen, wobei die Vorrichtung weiter eine Schiene (R) aufweist, die der Gestalt der Innenwand der doppelwandigen Anordnungen entspricht, wobei die Schiene (R) damit in gleitendem Eingriff steht.

4. Vorrichtung nach Anspruch 2 oder 3,
gekennzeichnet durch eine Anordnung mit drei Abstützwalzen (B1-B3) und vier ersten Formwalzen (R1-R4) an voneinander beabstandeten und parallel horizontal angeordneten Achsen, wobei die ersten Formwalzen (R1-R4) zuunterst angeordnet und die Abstützwalzen (B1-B3) oberhalb der ersten Formwalzen (R1-R4) angeordnet sind, wobei die vier ersten Formwalzen (R1-R4) formende äußere Begrenzungen (27, 37, 47, 57) aufweisen, die zur Durchführung von vier schrittweise zunehmenden Verformungsschritten angeordnet sind.

## Revendications

1. Méthode de déformation d'un revêtement tubulaire présentant une section transversale tubulaire et étant constitué d'un matériau thermoplastique, dans laquelle une section déformable de ladite section transversale est diamétralement incurvée vers l'intérieur et ses sections latérales opposées (14, 15) sont comprimées de façon à former une configuration à double paroi, comprenant les étapes de
a) obtention du revêtement tubulaire à l'aide de moyens d'extrusion (b) à température élevée, diminution de la température du revêtement tubulaire extrudé à l'aide de moyens de refroidissement, lesdits moyens de refroidissement transférant le revêtement tubulaire dans des moyens de déformation ;
b) support d'une section de retenue supérieure (12) de ladite section transversale ;
c) incurvation de ladite section transversale au niveau d'une section inférieure (13) et le long d'un plan de symétrie central a pour former un pli (16) ;
d) augmentation de l'incurvation en plusieurs étapes de ladite section inférieure (13) et progression dudit pli (16) vers l'intérieur, en position juxtaposée par rapport à la paroi interne (10) de la section transversale tubulaire, dans laquelle les extrémités inférieures (21, 22) desdites sections latérales opposées (14, 15) sont incurvées vers l'intérieur ; et
e) réduction de la configuration en coupe transversale en pliant les sections latérales opposées (14, 15) de la configuration à double paroi vers l'intérieur de façon à amener les extrémités inférieures (21, 22) à une position juxtaposée au plan de symétrie central a ;
f) incurvation du revêtement tubulaire de façon à obtenir ladite configuration à double paroi, conduite dans les moyens de déformation, à température réduite et contrôlée, à l'aide de moyens de contrôle thermique au cours de l'étape de déformation, de façon à maintenir la température de déformation nécessaire, et la section transversale tubulaire déformée est alors amenée à température ambiante.

2. Appareil de déformation d'un revêtement tubulaire présentant une section transversale tubulaire et constitué d'un matériau thermoplastique, ledit revêtement tubulaire étant obtenu à l'aide de moyens d'extrusion à haute température et refroidi à basse température par des moyens de refroidissement disposés entre les moyens d'extrusion et l'appareil de déformation, ledit appareil de déformation comprenant
a) une pluralité de premiers rouleaux de modelage rotatifs (R1-R4) ; et
b) une paire de deuxièmes rouleaux de modelage rotatifs (S1, S2), disposés latéralement sur des axes verticaux, aux côtés opposés d'un plan de symétrie central a et possédant une forme de bobine curviligne concave (60) permettant d'engager et de comprimer les sections des côtés opposés (14, 15) de ladite section transversale de revêtement tubulaire dudit plan de symétrie central a, de telle sorte que ladite paire de deuxièmes rouleaux de modelage rotatifs (S1, S2) soit disposée en aval des premiers rouleaux de modelage (R1-R4) ;
c) des rouleaux de retenue rotatifs (B1-B3) disposés sur un axe horizontal parallèle à l'axe desdits premiers rouleaux de modelage (R1-R4) et opposés auxdits premiers rouleaux de modelage ;
d) des moyens de contrôle thermique permettant de maintenir la température de déformation requise ;
dans lequel
e) les rouleaux de retenue (B1-B3) présentent une forme de bobine concave (25) au niveau du plan de symétrie central a, épousant la forme d'une section de retenue sensiblement semi-circulaire (12) de ladite section transversale de revêtement tubulaire ; et
f) les premiers rouleaux de modelage (R1-R4) présentent un périmètre formant et initiant un pli convexe (27, 37, 47, 57) au niveau du plan de symétrie central a, de façon à comprimer une section déformable (13) de ladite section transversale de revêtement tubulaire, diamétralement en direction de sa section de retenue (12), le long du plan de symétrie central a créant ainsi des configurations à double paroi.

3. Appareil selon la revendication 2, caractérisé en ce que les deuxièmes rouleaux de modelage (S1, S2) possèdent des brides latérales juxtaposées (61, 62) qui capturent la section transversaie de revêtement tubulaire déformée, l'appareil comprenant également un rail (R) épousant la forme des parois internes desdites configurations à double paroi, ledit rail (R) comprenant en outre une prise coulissante avec celui-ci.

4. Appareil selon la revendication 2 ou 3, caractérisé en ce qu'une disposition de trois rouleaux de retenue (B1-B3) et quatre premiers rouleaux de modelage (R1-R4) disposés sur des axes espacés horizontalement et parallèles, les premiers rouleaux de modelage (R1-R4) étant disposés en position inférieure et les rouleaux de retenue (B1-B3) étant disposés au-dessus desdits premiers rouleaux de modelage (R1-R4),dans lequel les quatre premiers rouleaux de modelage (R1-R4) possèdent des périmètres de modelage (27, 37, 47, 57) disposés pour quatre étapes de déformation progressive croissante.
